# EUROPEAN PATENT APPLICATION

(11) **EP 4 675 541 A1**
(43) Date of publication of application: **07.01.2026**
(21) Application number: 24764160.8
(22) Date of filing: 27.02.2024
(51) Int. Cl.: G06Q 50/04, G06Q 50/10, G06Q 10/06, G05B 19/418

(54) **METHOD AND DEVICE FOR ENVIRONMENTAL AND UTILITY MONITORING OF PHARMACEUTICAL PRODUCTION FACILITY**

(30) Priority: 27.02.2023 KR 20230026293
(71) Applicant: Celltrion, Inc., Incheon 22014 (KR)
(72) Inventor: KIM, Hyun-Jo, Incheon 22014 (KR); KIM, Eun-Jin, Incheon 22014 (KR); KIM, Hwi-Gon, Incheon 22014 (KR); BAEK, Woo-Jeong, Incheon 22014 (KR); OH, Hyun-Suk, Incheon 22014 (KR); JUNG, Myeong-Gyo, Incheon 22014 (KR); HA, Jae-Seung, Incheon 22014 (KR); SONG, In-Hyuk, Incheon 22014 (KR)
(74) Representative: EIP
(86) International application number: PCT/KR2024/002482
(87) International publication number: WO 2024/181761

(57) **Abstract**

A method for environmental and utility monitoring in a pharmaceutical manufacturing facility according to an embodiment of the present disclosure includes generating a sampling schedule for environmental and utility monitoring; assigning a sampler and sampling materials for a monitoring task corresponding to the sampling schedule; receiving information on environmental and utility sampling performed based on the sampling schedule; and receiving a request for incubation of a sample corresponding to the sampling.

## Description

### Technical Field

The present disclosure relates to technology for monitoring environments and utilities in a manufacturing facility.

More particularly, the present disclosure relates to a method and system for automating the quality control of environments and utilities in a pharmaceutical manufacturing facility.

### Background Art

Manufacturing environmental and utility monitoring is a fundamental requirement for Good Manufacturing Practice (GMP) pharmaceutical manufacturing facilities and equipment. In GMP pharmaceutical manufacturing facilities, pharmaceutical products are produced in a manufacturing environment that meets standards required by guidelines through environmental and utility monitoring, and whether water conforming to standards is used should be regularly checked according to environmental and utility monitoring programs.

Environmental monitoring is applied to monitoring of air (viable and non-viable particles), surfaces, and operators for assessment of the environment of GMP pharmaceutical manufacturing facilities, and utility monitoring is applied to monitoring of Water for Injection (WFI), Clean Steam (CS), Laboratory Purified Water (Lab. PW), Clean Air (CA), and Clean Gas (CG) used in pharmaceutical manufacturing facilities.

Based on the measures and alert level for each monitoring item, it may be determined whether an environmental and utility system operates normally, whether the system is suitably managed/maintained, and whether the system is contaminated, and corrective and preventive measures may be required accordingly. Particularly, environmental and utility monitoring is one of the most critical quality control factors in GMP for aseptic operations, because potential contamination routes related to product contamination can be detected through evaluation of the monitoring results. Therefore, proper operation and understanding of the environmental and utility monitoring system are required in terms of product compliance.

For the proper operation of the environmental and utility monitoring system, fundamental processes, including operation of planned frequencies appropriate for respective monitoring items, task scheduling for monitoring sample collection according to each frequency, on-site sample collection, request submission, analysis (incubation), and final data processing, should be performed in a coordinated manner. However, a complex program structure that has not only various monitoring items but also different frequencies and different measures and alert criteria depending on a cleanroom grade or a water sampling point and the vast amount of data requiring continuous trend evaluation on a quarterly and annual basis make it difficult to operate the environmental and utility monitoring system.

### Disclosure

### Technical Problem

An object of the present disclosure is to provide a system that is capable of efficiently performing environmental and utility monitoring in a pharmaceutical environment.

Another object of the present disclosure is to generate an environmental and utility monitoring schedule and perform environmental and utility monitoring according to the generated schedule, thereby preventing the omission of a task.

A further object of the present disclosure is to provide a dashboard including an environmental and utility monitoring schedule, missing schedule information, equipment-related information, and the like, thereby enabling environmental and utility monitoring information to be grasped at a glance.

Yet another object of the present disclosure is to ensure the integrity of sampling data by utilizing a timer function, an authorization setting function, and the like.

### Technical Solution

In order to accomplish the above objects, a method for environmental and utility monitoring in a pharmaceutical manufacturing facility according to an embodiment of the present disclosure includes generating a sampling schedule for environmental and utility monitoring, assigning a sampler and sampling materials for a monitoring task corresponding to the sampling schedule, receiving sampling information on environmental and utility sampling performed based on the sampling schedule, and receiving a request for incubation of a sample corresponding to the sampling.

Here, the sampling schedule for the environmental monitoring may include information about a sampling location and a sampling frequency, and the sampling schedule for the utility monitoring may include information about a utility type, a sampling location, a sampling point, an offline sampling frequency, and an online sampling frequency.

Here, the method may further include generating a missing task notification message, and the missing task notification message may be generated when reference information of the sampling schedule is not entered, when the monitoring task corresponding to the sampling schedule is not performed, when the received sampling information does not match schedule information, or when any information is missing from the received sampling information.

Here, the method may further include providing a dashboard that includes sampling schedule information for environmental and utility monitoring, missing sampling schedule information, information on tasks with unentered sampling times, an unavailable equipment list, and a sampling material check alert.

Here, receiving the sampling information may comprise providing a timer function from a sampling execution start time and receiving a sampling execution end time only after a preset time period.

Here, the sampling information may include a sampling execution start time, a sampling execution end time, a sampler, sampling status, and sampling material information.

Here, requesting the incubation of the sample may comprise checking whether the incubation of the sample is performed within a preset time period from a sampling time corresponding to the sample and whether the incubation is requested on equipment corresponding to the sample.

Here, receiving the sampling information may comprise receiving information on second environmental sampling performed out of necessity during a manufacturing process different from that of first environmental sampling performed based on the sampling schedule.

Here, the utility monitoring may include monitoring for water for injection, clean steam, purified water, clean air, and clean gas of the pharmaceutical manufacturing facility, and the environmental monitoring may include monitoring for air, a surface, and operators of the pharmaceutical manufacturing facility.

Here, generating the sampling schedule may comprise setting online/offline status for the utility monitoring, and the sampling schedule for the utility monitoring may have a different scheduling frequency depending on the online/offline status.

Also, a computer program according to an embodiment of the present disclosure or a recording medium that stores the computer program therein may be for performing the above-described method for environmental and utility monitoring in a pharmaceutical manufacturing facility.

Also, in order to accomplish the above objects, an apparatus for environmental and utility monitoring in a pharmaceutical manufacturing facility according to an embodiment of the present disclosure includes a processor for generating a sampling schedule for environmental and utility monitoring, assigning a sampler and sampling materials for a monitoring task corresponding to the sampling schedule, receiving sampling information on environmental and utility sampling performed based on the sampling schedule, and receiving a request for incubation of a sample corresponding to the sampling; and memory for storing the sampling schedule and the sampling information.

Here, the sampling schedule for the environmental monitoring may include information about a sampling location and a sampling frequency, and the sampling schedule for the utility monitoring may include information about a utility type, a sampling location, a sampling point, an offline sampling frequency, and an online sampling frequency.

Here, the processor may generate a missing task notification message when reference information of the sampling schedule is not entered, when the monitoring task corresponding to the sampling schedule is not performed, when the received sampling information does not match schedule information, or when any information is missing from the received sampling information.

Here, the processor may provide a dashboard including sampling schedule information for environmental and utility monitoring, missing sampling schedule information, information on tasks with unentered sampling times, an unavailable equipment list, and a sampling material check alert.

Here, when receiving the sampling information, the processor may provide a timer function from a sampling execution start time and receive a sampling execution end time only after a preset time period.

Here, the sampling information may include a sampling execution start time, a sampling execution end time, a sampler, sampling status, and sampling material information.

Here, when requesting the incubation of the sample, the processor may check whether the incubation of the sample is performed within a preset time period from a sampling time corresponding to the sample and whether the incubation is requested on equipment corresponding to the sample.

Here, the processor may receive information on second environmental sampling performed out of necessity during a manufacturing process different from that of first environmental sampling performed based on the sampling schedule.

Here, the utility monitoring may include monitoring for water for injection, clean steam, purified water, clean air, and clean gas of the pharmaceutical manufacturing facility, and the environmental monitoring may include monitoring for air, a surface, and operators of the pharmaceutical manufacturing facility.

Here, the processor may set online/offline status for the utility monitoring, and the sampling schedule for the utility monitoring may have a different scheduling frequency depending on the online/offline status.

### Advantageous Effects

According to the present disclosure, environmental and utility monitoring in a pharmaceutical environment may be efficiently performed.

Also, the present disclosure generates an environmental and utility monitoring schedule and performs environmental and utility monitoring according to the generated schedule, thereby preventing the omission of a task.

Also, the present disclosure provides a dashboard including an environmental and utility monitoring schedule, missing schedule information, equipment-related information, and the like, thereby enabling environmental and utility monitoring information to be grasped at a glance.

Also, the present disclosure may ensure the integrity of sampling data by utilizing a timer function, an authorization setting function, and the like.

### Description of Drawings

FIG. 1 is a flowchart illustrating a method for environmental and utility monitoring in a pharmaceutical manufacturing facility according to an embodiment of the present disclosure.
FIG. 2 is a flowchart illustrating key procedures for utility monitoring.
FIGS. 3A to 3E are flowcharts illustrating in detail procedures for utility monitoring.
FIG. 4 is a flowchart illustrating key procedures for periodic environmental monitoring.
FIGS. 5A to 5D are flowcharts illustrating in detail procedures for periodic environmental monitoring.
FIG. 6 is a flowchart illustrating key procedures for non-routine environmental monitoring.
FIGS. 7A to 7B are flowcharts illustrating in detail procedures for non-routine environmental monitoring.
FIGS. 8A to 8B are example displays of environmental schedules.
FIGS. 9A to 9B are example displays of utility schedules.
FIG. 10 is an example display of missing schedule information.
FIG. 11 is an example of a sampling time input screen using a timer function.
FIG. 12 is an example of a message displayed for a request submitted when a deadline has passed after sampling was performed.
FIG. 13 is an example of message generation for entry of a time earlier than the current time.
FIG. 14 is an example display of a list of unavailable equipment.
FIG. 15 is an example of an automatic determination screen for measurement results.
FIG. 16 is an example display of a list with an unentered end time.
FIG. 17 is an example display of a list of equipment that needs to be checked.
FIGS. 18 to 21 are examples of content included in a missing task message.
FIG. 22 is a block diagram illustrating an environmental and utility monitoring system according to an embodiment of the present disclosure.
FIG. 23 is a view illustrating the configuration of a computer system according to an embodiment.

### Best Mode

The advantages and features of the present disclosure and methods of achieving them will be apparent from the following exemplary embodiments to be described in more detail with reference to the accompanying drawings. However, the present disclosure may be implemented in various forms, without being limited to the following exemplary embodiments, and the exemplary embodiments are provided only to disclose the present disclosure and to let those skilled in the art to which the present disclosure pertains know the category of the present disclosure. The present disclosure is to be defined based only on the claims. Throughout the specification, the same reference numerals or the same reference designators denote the same elements.

Although the terms "first," "second," etc. may be used herein to describe various elements, these elements are not limited by these terms. These terms are only used to distinguish one element from another element. Accordingly, a first element discussed below could be referred to as a second element without departing from the technical spirit of the present disclosure.

The terms used herein are for the purpose of describing particular embodiments only and are not intended to limit the present disclosure. As used herein, the singular forms are intended to include the plural forms as well, unless the context clearly indicates otherwise. It will be further understood that the terms "comprises," or "comprising," when used herein, specify the presence of stated components or steps, but do not preclude the presence or addition of one or more other components or steps.

In the present specification, each of expressions such as "A or B", "at least one of A and B", "at least one of A or B", "A, B, or C", "at least one of A, B, and C", and "at least one of A, B, or C" may include any one of the items listed in the expression or all possible combinations thereof.

Unless differently defined, all terms used herein may be interpreted as having meanings generally understood by those skilled in the art to which the present disclosure pertains. Also, terms defined in generally used dictionaries are not to be interpreted as having ideal or excessively formal meanings unless they are definitively defined in the present specification.

Hereinafter, embodiments of the present disclosure will be described in detail with reference to the accompanying drawings. In the following description, the same reference numerals are used to designate the same or similar elements throughout the drawings, and repeated descriptions of the same elements will be omitted.

Hereinbelow, an environmental and utility monitoring system in a pharmaceutical manufacturing facility according to an embodiment of the present invention may be referred to as an Environmental Monitoring-Utility Monitoring System (EUMS).

The EUMS may correspond to an electronic system for management and task automation for the entire process from planning sampling schedules for environmental monitoring and utility monitoring within a pharmaceutical facility to recording sampling performed at the production site.

Here, the electronic system may correspond to a concept including all or part of a server, a computing device, a mobile device, an electronic program, a database, and a network for connecting these.

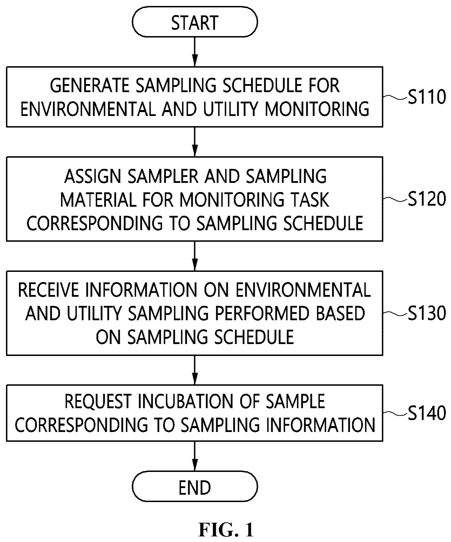

FIG. 1 is a flowchart illustrating a method for environmental and utility monitoring in a pharmaceutical manufacturing facility according to an embodiment of the present disclosure.

The method for environmental and utility monitoring in a pharmaceutical manufacturing facility according to an embodiment of the present disclosure may be performed by an environmental and utility monitoring apparatus, such as a computing device, a server, or the like. Also, the method for environmental and utility monitoring according to an embodiment of the present disclosure may be performed by an environmental and utility monitoring system including multiple devices and servers.

Here, the method for environmental and utility monitoring in a pharmaceutical manufacturing facility may be performed by transmitting or receiving data via the form of an application (or program) implemented in multiple devices. Here, the application may be set to have different functions depending on the role of the user who uses the application.

For example, the role of the user may include an operation manager, a supervisor, a power user, a scheduler, a sampler, a reviewer, a viewer, and a part-timer.

Referring to FIG. 1, the method for environmental and utility monitoring in a pharmaceutical manufacturing facility according to an embodiment of the present disclosure includes generating a sampling schedule for environmental and utility monitoring at step S110, assigning a sampler and sampling materials for a monitoring task corresponding to the sampling schedule at step S120, receiving sampling information on environmental and utility sampling performed based on the sampling schedule at step S130, and requesting incubation of a sample corresponding to the sampling at step S140.

Here, the sampling schedule for the environmental monitoring may include information about a sampling location and a sampling frequency, and the sampling schedule for the utility monitoring may include information about a utility type, a sampling location, a sampling point, an offline sampling frequency, and an online sampling frequency.

More specifically, the sampling schedule for the environmental monitoring may include information about a schedule plan. Here, the schedule plan may be set to daily (D), once a week (W), twice a week (W2), once a month (M), twice a month (M2), once a quarter (Q), once every six months (H), or the like, and may be set differently depending on the sampling location and sampling schedule.

Also, the sampling schedule for the environmental monitoring may include sampling point information, labeling information corresponding to the sampling point, and information about a sampling method, equipment used for sampling, a sampling area, and a process area.

Here, the information about the equipment used for sampling may include an equipment identifier, an equipment type, an ISO type, information about whether zero filtering is required, Out-Of-Service (OOS) status information, and the like.

More specifically, the offline sampling frequency and online sampling frequency of the sampling schedule for the utility monitoring may be set to daily (D), once a week (W), twice a week (W2), once a month (M), twice a month (M2), once a quarter (Q), once every six months (H), or the like, and may be set differently depending on the sampling location and sampling schedule.

Also, the sampling schedule for the utility monitoring may include sampling point information, labeling information corresponding to the sampling point, and information about a sampling method and equipment used for sampling.

Here, the online sampling frequency and the offline sampling frequency may be used depending on the operational status (online/offline) of the pharmaceutical facility. Here, information on the online or offline status may be received or entered via the application implemented in the computing device.

For example, the offline status may correspond to a condition in which the use of the utility facility has been suspended due to the maintenance/repair of the corresponding facility. That is, in the event of an exceptional situation, a monitoring task may be performed according to the offline frequency. Also, in the method according to an embodiment, when an update regarding the offline or online status is entered, an alert message including the corresponding content may be generated. Here, the alert message may include information about the start date/time of the online/offline transition, the end date/time of the online/offline transition, the reason for the online/offline transition, and a comment.

Here, the method may further include generating a missing task notification message, and the missing task notification message may be generated when reference information of the sampling schedule is not entered, when the monitoring task corresponding to the sampling schedule is not performed, when the received sampling information does not match schedule information, or when any information is missing from the received sampling information.

More specifically, when the reference information of the sampling schedule is not entered, the missing task notification message may include a sampling point and labeling information corresponding to the sampling point.

Also, when the monitoring task corresponding to the sampling schedule is not performed, the missing task notification message may include a sampling point, labeling information corresponding to the sampling point, a sampling frequency, and a monitoring task deadline.

Also, when the received sampling information does not match schedule information, the missing task notification message may include information about a sampling point, execution form status, and a sampling frequency.

Also, when any information is missing from the received sampling information, the missing task notification message may include information about the type of the missing information, a sampling point, and a sampling frequency.

Here, the method may further include providing a dashboard that includes sampling schedule information for environmental and utility monitoring, missing sampling schedule information, information on tasks with unentered sampling times, an unavailable equipment list, and a sampling material check alert.

Here, the dashboard may correspond to a user interface provided to a terminal or the like for the environmental and utility monitoring.

Here, receiving the environmental and utility sampling information may comprise providing a timer function from a sampling execution start time and receiving a sampling execution end time only after a preset time period.

Here, the sampling information may include a sampling execution start time, a sampling execution end time, a sampler, sampling status, and sampling material information.

Here, requesting the incubation of the sample may comprise checking whether the incubation of the sample is performed within a preset time period from the sampling time corresponding to the sample and whether the incubation is requested on equipment corresponding to the sample.

Here, receiving the sampling information may comprise information on second environmental sampling performed out of necessity during a manufacturing process different from that of first environmental sampling performed based on the sampling schedule.

Here, the utility monitoring may include monitoring for water for injection, clean steam, purified water, clean air, and clean gas of the pharmaceutical manufacturing facility, and the environmental monitoring may include monitoring for the air, surface, and operators of the pharmaceutical manufacturing facility.

Here, generating the sampling schedule may comprise setting online/offline status for the utility monitoring, and the sampling schedule for the utility monitoring may have a different scheduling frequency depending on the online/offline status.

Also, a computer program according to an embodiment of the present disclosure or a recording medium that stores the computer program therein may be for performing the above-described method for environmental and utility monitoring in a pharmaceutical manufacturing facility.

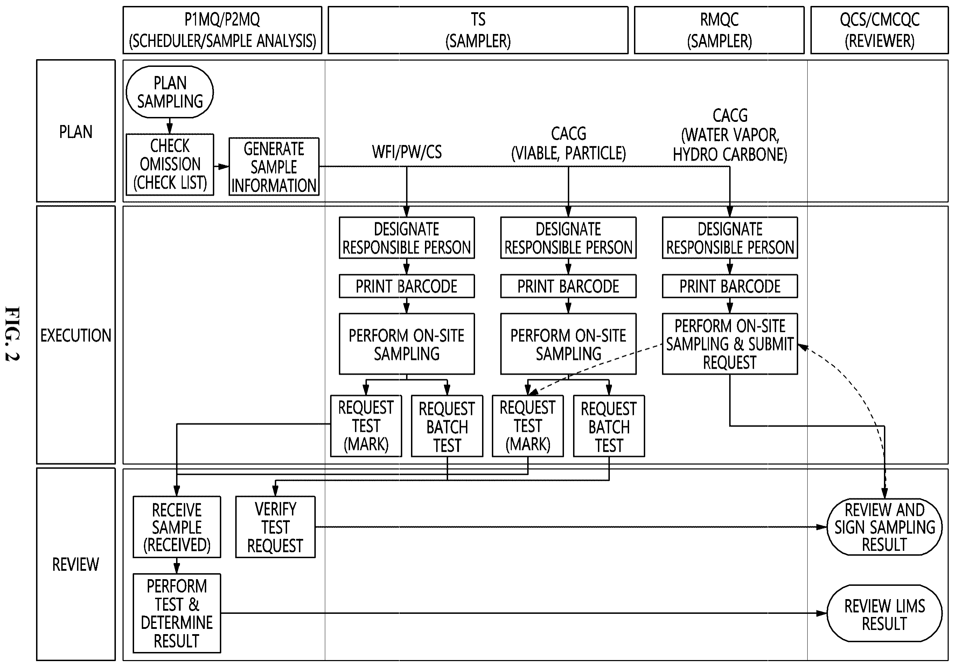

Hereinafter, a process for performing environmental and utility monitoring in the method according to an embodiment of the present disclosure will be described in detail with reference to FIGS. 2 to 7B.

FIG. 2 is a flowchart illustrating key procedures for utility monitoring.

Specifically, FIG. 2 is a view illustrating key unit processes for a Plan-Do-Check-Act (PDCA) procedure for utility monitoring, and the utility monitoring procedure may be performed through plan, execution, and review procedures.

Referring to FIG. 2, the utility monitoring procedure according to an embodiment of the present disclosure may include generating a sampling plan, checking omissions, and generating sample information. Here, the utility monitoring may include monitoring for water for injection (WFI), clean steam (CS), purified water (Lab, PW), clean air (CA), and clean gas (CG) of the pharmaceutical manufacturing facility.

When the sample information is generated, the method for utility monitoring according to an embodiment of the present disclosure may perform on-site sampling by assigning a sampler (responsible person) and printing a barcode. When on-site sampling is performed, a test request or batch test request for the detected sample may be submitted.

At the review step, the test-requested sample may be received, the test result may be determined, and the result may be reviewed by a reviewer by the method for utility monitoring according to an embodiment of the present disclosure. Also, for the batch-test-requested samples, the sampling request may be verified and reviewing and signing the result may be performed by the reviewer.

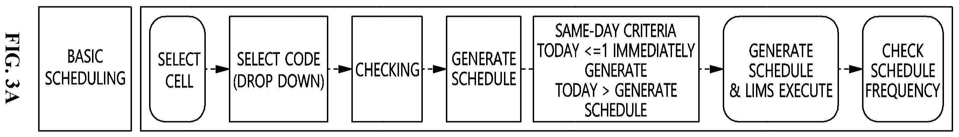

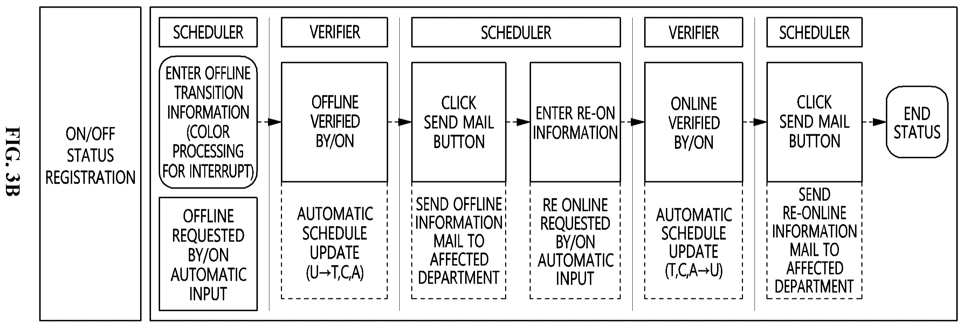

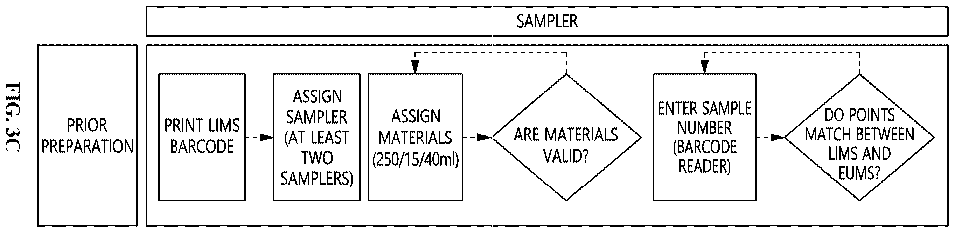

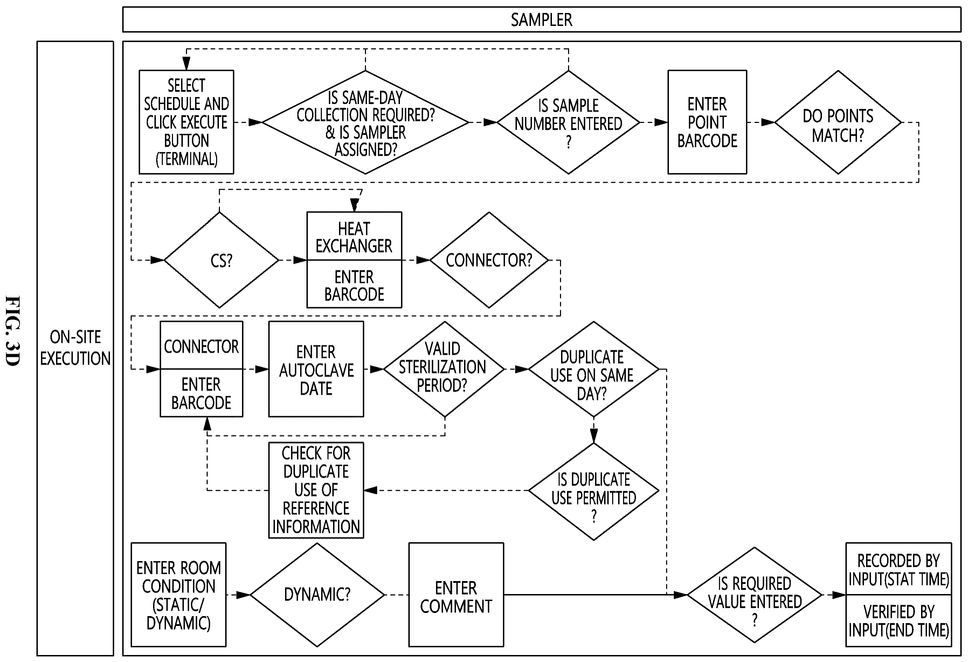

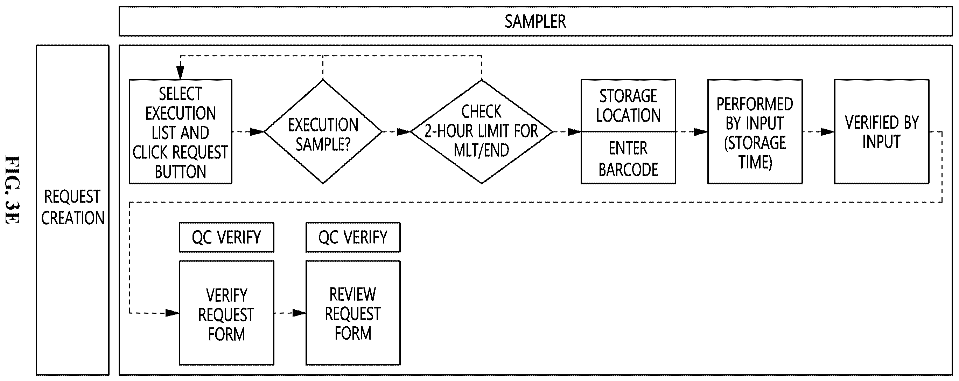

FIGS. 3A to 3E are flowcharts illustrating in detail procedures for utility monitoring.

Referring to FIGS. 3A to 3E, in the method according to an embodiment of the present disclosure, the procedure for performing utility monitoring may include performing basic scheduling, registering on/off status, performing prior preparation, performing on-site execution, and creating a request.

Here, performing the basic scheduling may include selecting a cell, selecting a code, performing checking, generating a schedule, determining whether the same-day criteria are satisfied, generating a schedule, and checking a schedule frequency.

Here, performing the basic scheduling may prevent an omission in the frequency and the omission of sample generation through a sample collection schedule, automatic sample generation, and schedule checking functions. Here, the method according to an embodiment of the present disclosure may provide an automatic schedule switching function when registering the sampling schedule. Also, the method according to an embodiment may provide the functions of automatically generating samples and automatically generating an electronic form. Also, the method according to an embodiment may provide an automatic frequency omission check and notification function for a complex schedule by automatically recognizing the schedule type.

Here, registering the on/off status may include entering, by a scheduler, offline transition information; verifying, by a verifier, the offline transition; sending, by the scheduler, a mail about the offline status transition; entering re-online information; verifying, by the verifier, the re-online transition; and sending, by the scheduler, a mail. Here, when the verifier verifies the online/offline transition, the schedule may be automatically updated.

Here, performing the prior preparation may include printing a barcode, assigning a sampler, assigning materials, validating the materials, entering a sample number, and verifying whether sample points match.

Here, printing the barcode may be performed through a separate program called 'LIMS', but the scope of the present disclosure is not limited thereto. Here, verifying the sample point may correspond to verifying whether points match between programs using the printed barcode. Here, assigning the sampler may comprise assigning two or more samplers. Here, assigning the materials may comprise selecting the volume of the materials to be assigned.

When performing the prior preparation for sample collection, compliance with GMP procedures may be ensured through a validity check function, thereby ensuring quality and preventing task inconsistencies. Here, the method according to an embodiment of the present disclosure may provide a valid sampler list and a sampler designation function when performing the prior preparation for sample collection. Also, the method according to an embodiment may provide the function of validating the materials to be used and the function of disabling the use when the validity is not satisfied. Also, the method according to an embodiment may provide the function of checking whether points match between the sample numbering system (LIMS) and the EUMS. Also, the method according to an embodiment may provide the function of restricting writing by users other than the designated sampler.

Here, performing the on-site execution may include selecting a schedule and clicking an execute button, verifying whether a sample requires same-day collection and whether a sampler is assigned, verifying whether a sample number is entered, entering a sampling point barcode, and verifying whether sampling points match.

Also, performing the on-site execution may include verifying CS, entering a heat exchanger barcode, verifying a connector, entering a connector barcode, entering an autoclave date, verifying a valid sterilization period, and verifying duplicate use permission.

Also, performing the on-site execution may include entering a sampling room condition (static/dynamic), verifying dynamic status, entering a comment, verifying whether a required value is entered, and entering a start time/end time.

Here, creating the request may include selecting an execution list and submitting a request, verifying an execution sample, verifying a start time/end time, entering a storage location barcode, entering a storage time, and entering a verifier.

Here, performing the on-site execution may ensure task accuracy and data integrity through the function of checking samples. Here, the method according to an embodiment of the present disclosure may provide the function of checking whether a sample requires same-day collection. Also, the method according to an embodiment may provide the function of checking completion of the preliminary record for the collected sample. Also, the method according to an embodiment may provide the function of checking whether the on-site sample collection point matches an electronic form for leaving the record.

Here, performing the on-site execution may ensure compliance with GMP procedures through the function of checking a per-sample equipment record for error prevention, thereby ensuring quality and task accuracy. Here, the method according to an embodiment of the present disclosure may provide the function of checking required input equipment for each sample. Also, the method according to an embodiment may provide the function of automatically disabling a non-required field. Also, the method according to an embodiment may provide the function of validating equipment (checking whether a valid sterilization period expires and checking for duplicate use).

Here, performing the on-site execution may ensure task accuracy and data integrity through the function of checking a required record field for each sample. Here, the method according to an embodiment of the present disclosure may provide the function of checking a required input field for each status of the sample collection space. Also, the method according to an embodiment may provide the function of checking completion of entry into the final required input field. Also, the method according to an embodiment may provide the function of preventing an error in sampler information entry (assigned user check, duplicate/incorrect entry check, and system account check).

Here, creating the request may ensure compliance with GMP procedures through the function of preventing a sample request error after completion of sample collection, thereby ensuring quality and task accuracy. Here, the method according to an embodiment of the present disclosure may provide the function of checking the collected sample. Also, the method according to an embodiment may provide a sample validity check function (the function of restricting submission of a sample past the request deadline). Also, the method according to an embodiment may provide the function of checking whether each sample is assigned to equipment appropriate for the sample.

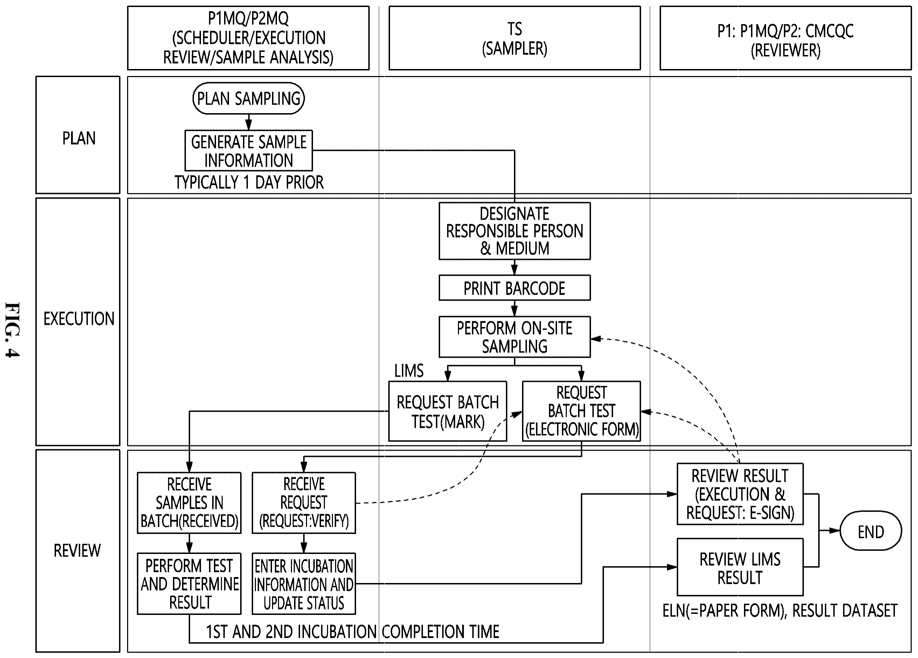

FIG. 4 is a flowchart illustrating key procedures for periodic environmental monitoring.

Specifically, FIG. 4 is a view illustrating key unit processes for a Plan-Do-Check-Act (PDCA) procedure for periodic environmental monitoring, and the periodic environmental monitoring procedure may be performed through plan, execution, and review procedures.

Referring to FIG. 4, the periodic environmental monitoring procedure according to an embodiment of the present disclosure may include generating a sampling plan and generating sample information.

When the sample information is generated, the method for periodic environmental monitoring according to an embodiment of the present disclosure may perform on-site sampling by assigning a sampler (responsible person) and printing a barcode. When on-site sampling is performed, a test request for the detected sample may be submitted or a batch test request may be submitted using an electronic form.

At the review step, the test-requested sample may be received, the test result may be determined, and the result may be reviewed by a reviewer by the method for periodic environmental monitoring according to an embodiment of the present disclosure. Also, for the batch-test-requested samples, the sampling request may be verified and reviewing and signing the result may be performed by the reviewer.

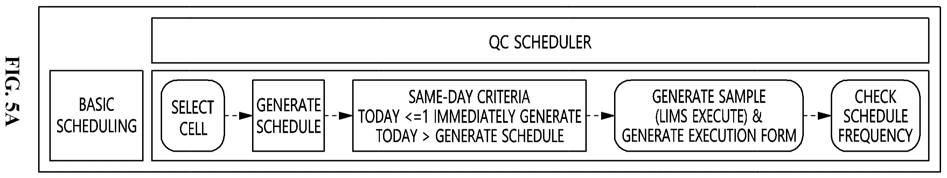

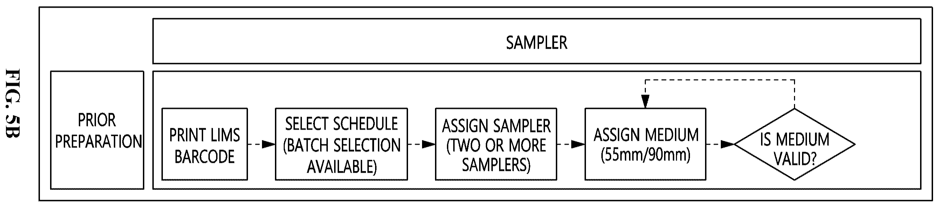

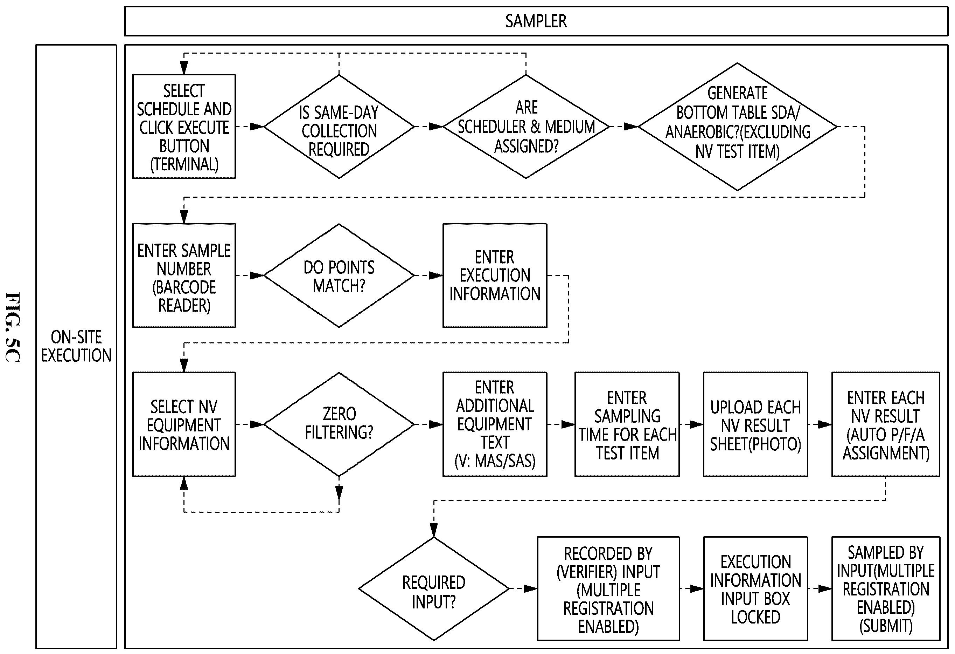

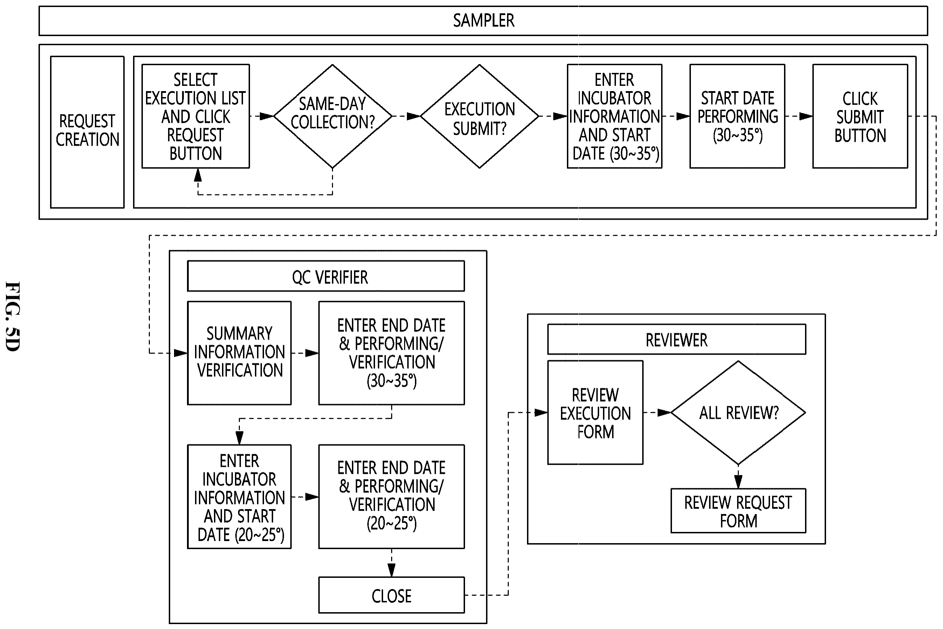

FIGS. 5A to 5D are flowcharts illustrating in detail procedures for periodic environmental monitoring.

Referring to FIGS. 5A to 5D, in the method according to an embodiment of the present disclosure, the procedure for performing periodic environmental monitoring may include performing basic scheduling, performing prior preparation, performing on-site execution, and creating a request.

Here, performing the basic scheduling may include selecting a cell, generating a schedule, determining whether the same-day criteria are satisfied, generating a sample and generating an execution form, and checking a schedule frequency.

Here, performing the basic scheduling may prevent an omission in the frequency and the omission of sample generation through a sample collection schedule, automatic sample generation, and schedule checking functions. Here, the method according to an embodiment of the present disclosure may provide the functions of automatically generating samples according to the sampling schedule and automatically generating an electronic form. Also, the method according to an embodiment may provide an automatic frequency omission check and notification function (displaying on a screen and providing a mail) for a complex schedule by automatically recognizing the schedule type.

Here, performing the prior preparation may include printing a barcode, assigning a sampler, assigning a medium, and verifying the validity of the medium.

Here, printing the barcode may be performed through a separate program called 'LIMS', but the scope of the present disclosure is not limited thereto. Here, assigning the sampler may comprise assigning two or more samplers. Here, assigning the medium may comprise selecting the volume of the medium to be assigned.

Here, performing the prior preparation may ensure compliance with GMP procedures through a validity check function when performing prior preparation for sample collection, thereby ensuring quality and preventing task inconsistencies. Here, the method according to an embodiment of the present disclosure may provide a valid sampler list and a sampler designation function. Also, the method according to an embodiment may provide the function of validating the materials to be used and the function of disabling the use when the validity is not satisfied. Also, the method according to an embodiment may provide the function of checking whether the points match between the sample numbering system (LIMS) and the EUMS.

Here, performing the on-site execution may include selecting a schedule and clicking execution, verifying whether a sample requires same-day collection and whether a scheduler and a medium are assigned, checking for SDA sampling/anaerobic sampling, verifying whether a sample number is entered, and verifying whether sampling points match.

Here, performing the on-site execution may ensure task accuracy and data integrity through the function of checking samples. Here, the method according to an embodiment of the present disclosure may provide the function of checking whether a sample requires same-day collection. Also, the method according to an embodiment may provide the function of checking completion of the preliminary record for the collected sample. Also, the method according to an embodiment may provide the function of checking whether the on-site sample collection point matches an electronic form for leaving the record.

Also, performing the on-site execution may include entering execution information, selecting NV equipment information, and verifying whether zero filtering is performed.

Here, performing the on-site execution may ensure compliance with GMP procedures through the function of checking a per-sample equipment record for error prevention, thereby ensuring quality and task accuracy.

Here, the method according to an embodiment of the present disclosure may provide the function of checking required input equipment for each sample. Also, the method according to an embodiment may provide the function of automatically disabling a non-required field. Also, the method according to an embodiment may provide the function of validating equipment (whether zero-filtering is performed and whether the equipment is OOS).

Also, performing the on-site execution may include entering a sampling time for each test item, uploading each NV result sheet, entering each NV result, checking a required input field, entering a verifier, locking an execution information input box, and entering a sampler.

Here, performing the on-site execution may ensure task accuracy and data integrity through the function of automatically determining results and checking a required record field for each sample. Here the method according to an embodiment of the present disclosure may provide automatic result determination and past/future time entry prevention functions. Also, the method according to an embodiment may provide the function of checking completion of entry into the final required input field. Also, the method according to an embodiment may provide the function of preventing an error in sampler information entry (assigned user check, duplicate/incorrect entry check, and system account check).

Here, creating the request may include selecting an execution list and submitting a request, verifying whether the sample is collected on the same day, verifying an execution sample, and entering incubator information and a first incubation start date.

Here, creating the request may ensure compliance with GMP procedures through the function of preventing a sample request error after sample collection is completed, thereby ensuring quality and task accuracy. Here, the method according to an embodiment of the present disclosure may provide the function of checking the collected sample.

Here, after creating the request, the method according to an embodiment of the present disclosure may include entering a first incubation end date, entering incubator information and a second incubation start date, and entering a second incubation end date.

Here, the steps after the request creation may ensure compliance with GMP procedures through the functions of automatically generating a per-sample incubation record input box and verifying an incubation period, thereby ensuring quality and task accuracy. Here, the method according to an embodiment of the present disclosure may provide the functions of generating a required incubation information field for each sample type and verifying the incubation period (start/end time).

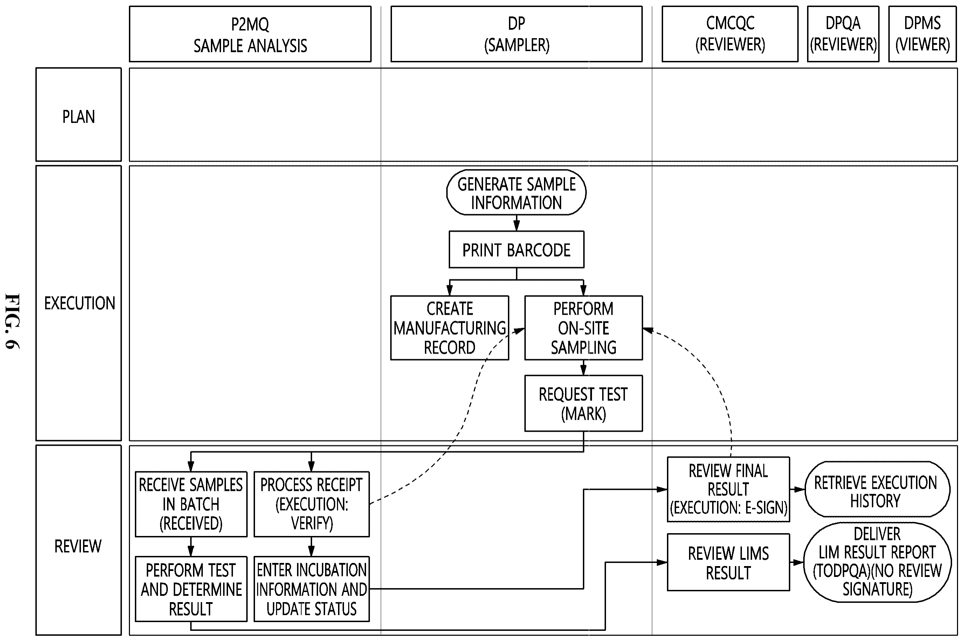

FIG. 6 is a flowchart illustrating key procedures for non-routine environmental monitoring.

Specifically, FIG. 6 is a view illustrating key unit processes for a Plan-Do-Check-Act (PDCA) procedure for non-routine environmental monitoring, and the non-routine environmental monitoring procedure may be performed through execution and review procedures.

Referring to FIG. 6, the method for non-routine environmental monitoring according to an embodiment of the present disclosure may perform on-site sampling by generating sample information and printing a barcode. When on-site sampling is performed, a test request for the detected sample may be submitted.

At the review step, the test-requested sample may be received, the test result may be determined, and the result may be reviewed by a reviewer by the method for non-routine environmental monitoring according to an embodiment of the present disclosure. Also, for the test-requested sample, the sampling request may be verified and reviewing and signing the result may be performed by the reviewer.

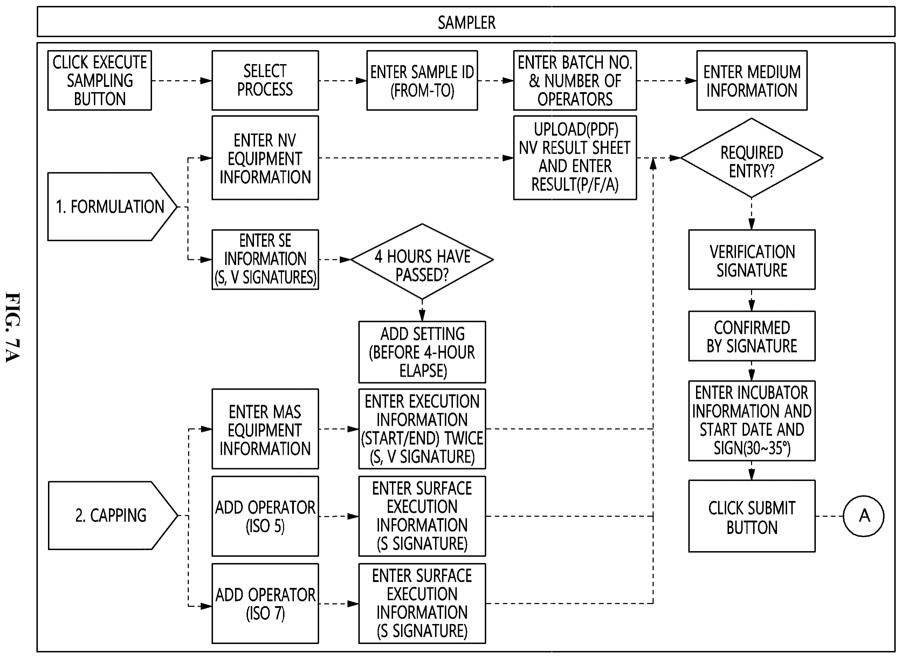

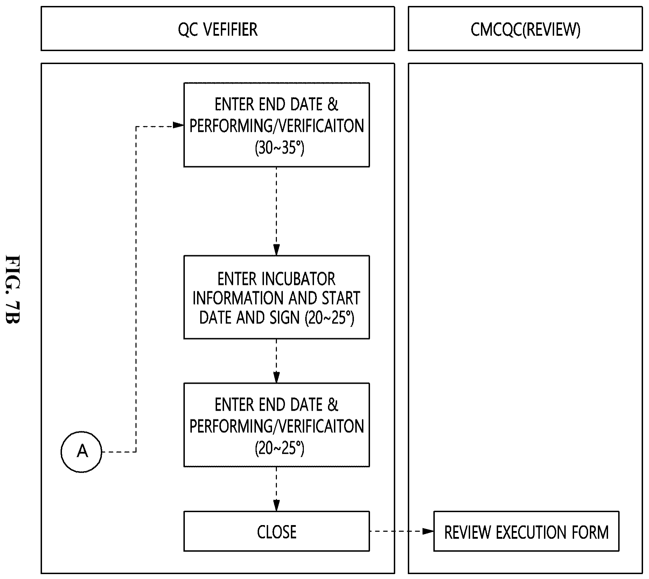

FIGS. 7A to 7B are flowcharts illustrating in detail procedures for non-routine environmental monitoring.

Referring to FIGS. 7A to 7B, in the method according to an embodiment of the present disclosure, the procedure for performing non-routine environmental monitoring may include clicking an execute sampling button, selecting a process, entering a sample ID, entering a batch number and the number of operators, and entering medium information.

Here, the procedure for performing non-routine environmental monitoring may prevent the omission of sample collection by providing a process selection function. Here, the method according to an embodiment of the present disclosure may provide the function of automatic access to a sampling execution form in a format defined for each process depending on the selection of the process.

Also, the procedure for performing non-routine environmental monitoring may include entering NV equipment information, entering SE information, determining whether a preset time has passed (four hours) after sample collection, adding settings, and uploading an NV result sheet.

Here, the procedure for performing non-routine environmental monitoring may prevent the omission of a task through a sample collection check function. Here, the method according to an embodiment of the present disclosure may provide a check function (notification of whether the collection time has passed) such that sample collection is performed according to appropriate criteria.

Also, the procedure for performing non-routine environmental monitoring may include entering MAS equipment information, adding an operator, and entering execution information.

Here, the procedure for performing non-routine environmental monitoring may ensure task accuracy and data integrity through the function of preventing errors in equipment and operator records. Here, the method according to an embodiment of the present disclosure may provide the function of checking registration of equipment and operators for each process (verifying the validity of the equipment and operators).

Also, the procedure for performing non-routine environmental monitoring may include detecting whether a required input field is entered, making a verification signature, and confirming the signature.

Here, the procedure for performing non-routine environmental monitoring ensures compliance with GMP procedures through a required record field check function, thereby ensuring quality and task accuracy. Here, the method according to an embodiment of the present disclosure may provide the function of checking entry into a required input field. Also, the method according to an embodiment may provide the function of preventing an error in sampler information entry (duplicate/incorrect entry check and system account check).

Also, the procedure for performing non-routine environmental monitoring may include entering an incubation start date, submission, and entering an incubation end date. Here, the procedure for performing non-routine environmental monitoring ensures compliance with GMP procedures through the functions of automatically generating a per-sample incubation record input box and verifying an incubation period, thereby ensuring quality and task accuracy. Here, the method according to an embodiment of the present disclosure may provide the function of generating a required incubation information field for each sample type and verifying the incubation period (start/end time).

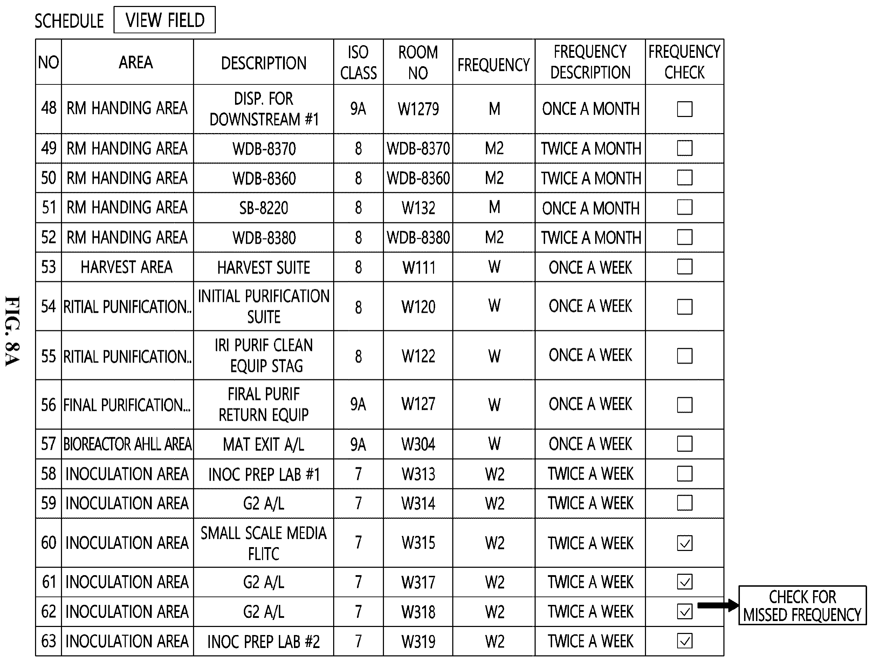

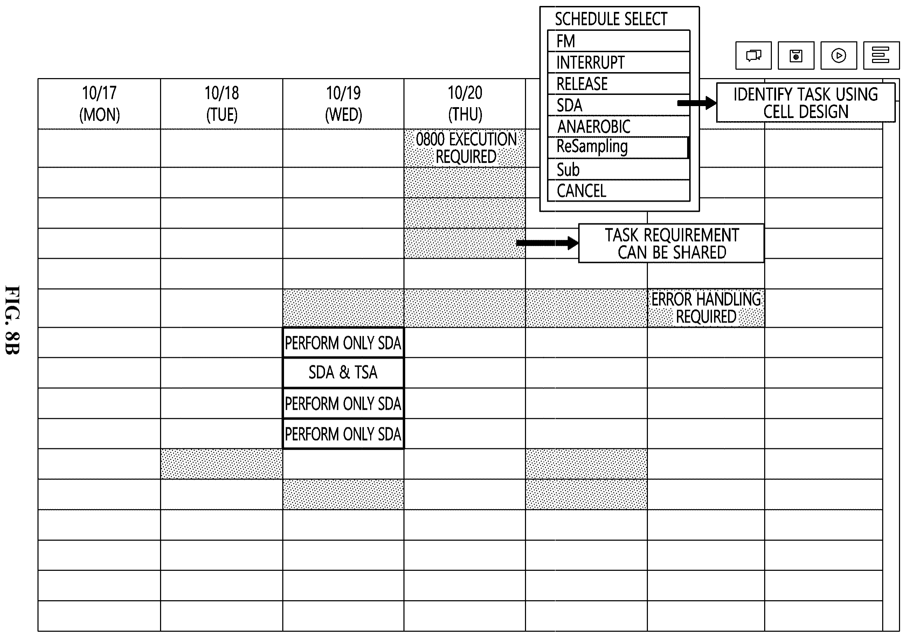

Hereinafter, a dashboard (user interface) provided by the method for environmental and utility monitoring in a pharmaceutical manufacturing facility according to an embodiment of the present disclosure will be described in detail with reference to FIGS. 8A to 17.

FIGS. 8A to 8B are example displays of environmental schedules.

Referring to FIGS. 8A to 8B, a schedule section that displays environmental schedules in a table format by presenting each environmental schedule as an entry can be seen. The table for managing the environmental schedules has fields such as 'Area', 'Description', 'ISO Class', 'Room No', 'Frequency', 'Frequency Description', and 'Frequency Check'. Also, there are separate fields for displaying task requirements and monitoring results on the dates within a preset period from the current date.

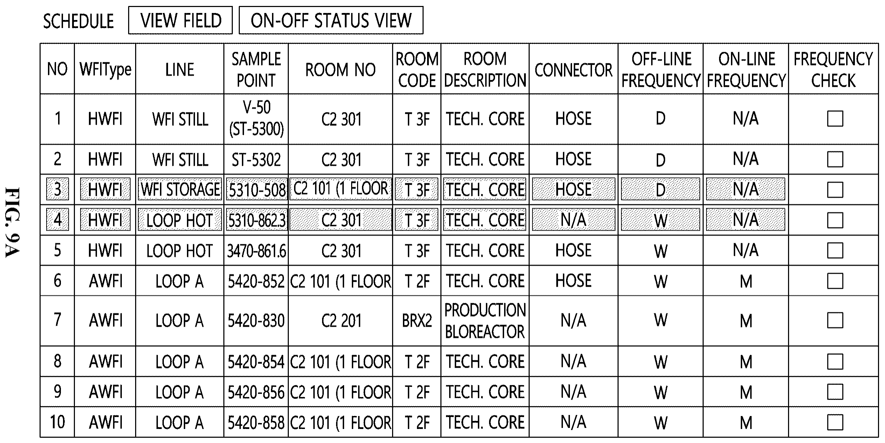

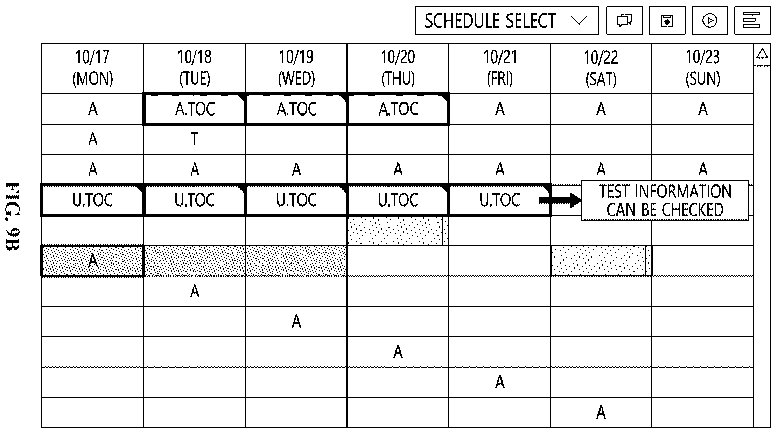

FIGS. 9A to 9B are example displays of utility schedules.

Referring to FIGS. 9A to 9B, a schedule section that displays utility schedules in a table format by presenting each utility schedule as an entry can be seen. The table for managing the utility schedules has fields such as 'WFIType', 'Line', 'Sample Point', 'Point Description', 'Room No', 'Room Description', 'Connector', 'Off-line Frequency', 'On-line Frequency', and 'Frequency Check'. Also, there are separate fields for displaying task requirements and monitoring results on the dates within a preset period from the current date.

As illustrated in FIGS. 8A to 9B, the schedule display screen according to an embodiment of the present disclosure may enable tasks to be distinguished using different designs of cells corresponding to dates and schedules and enable task requirements to be shared using a comment function. That is, in consideration of the possibility that exceptional on-site situations may occur outside the format implemented by assigning system rules, a comment registration/editing method is implemented, whereby it is possible to flexibly respond to such exceptional situations. Also, by displaying missed frequency information in the 'Frequency check' field, a user may easily detect whether any frequency has been missed.

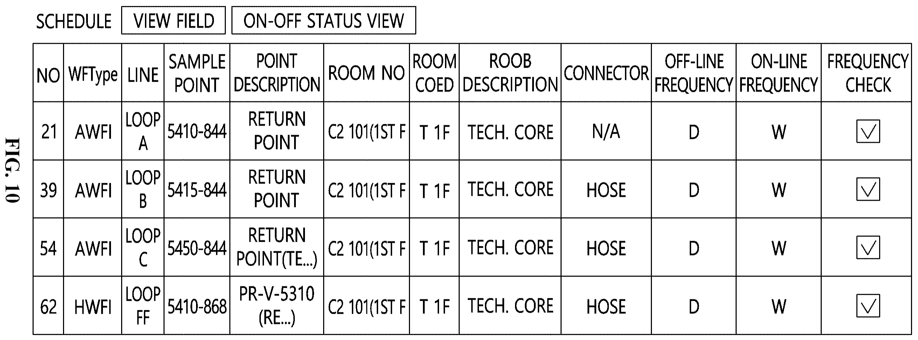

FIG. 10 is an example display of missing schedule information.

Referring to FIG. 10, in the method according to an embodiment of the present disclosure, the dashboard provided to a user may include a separate tab containing missing schedule information. Accordingly, the user may detect the missing schedule information in real time.

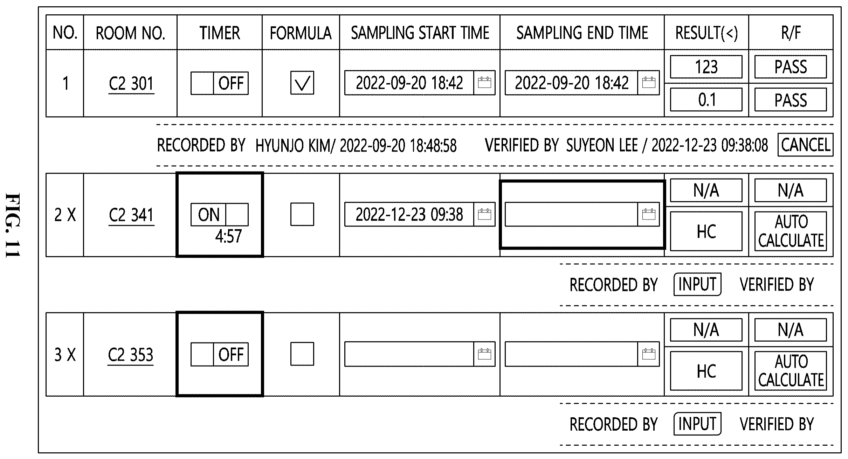

FIG. 11 is an example of a sampling time input screen using a timer function.

Referring to FIG. 11, it can be seen that a timer is running as the timer function on the left side is switched on. The timer duration may be set differently depending on the target to be detected and the location. Here, the method according to an embodiment may control the input screen to disallow input of the sampling end time, which is displayed in red on the right side of FIG. 11, until the timer duration expires. By controlling the method of entering the sampling end time in this way, compliance with GMP procedures may be ensured, and quality may be ensured.

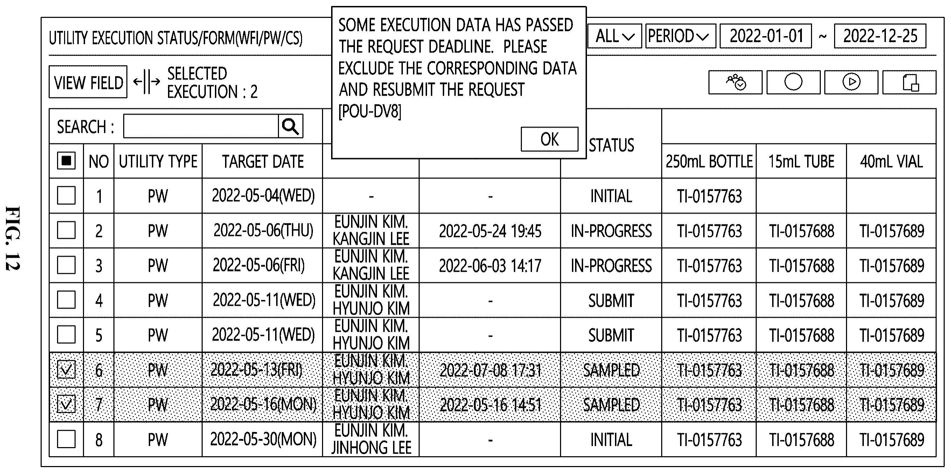

FIG. 12 is an example of a message displayed for a request that is made when the deadline has passed after sampling.

Referring to FIG. 12, it can be seen that, when a user submits a request for samples, the request deadline of which has passed, like samples 6 and 7 in the lower section, a message saying that the request cannot be allowed because the request deadline for the data has passed is generated. By requiring a request to be submitted within a preset period after sampling, compliance with GMP procedures may be ensured, whereby quality may be ensured.

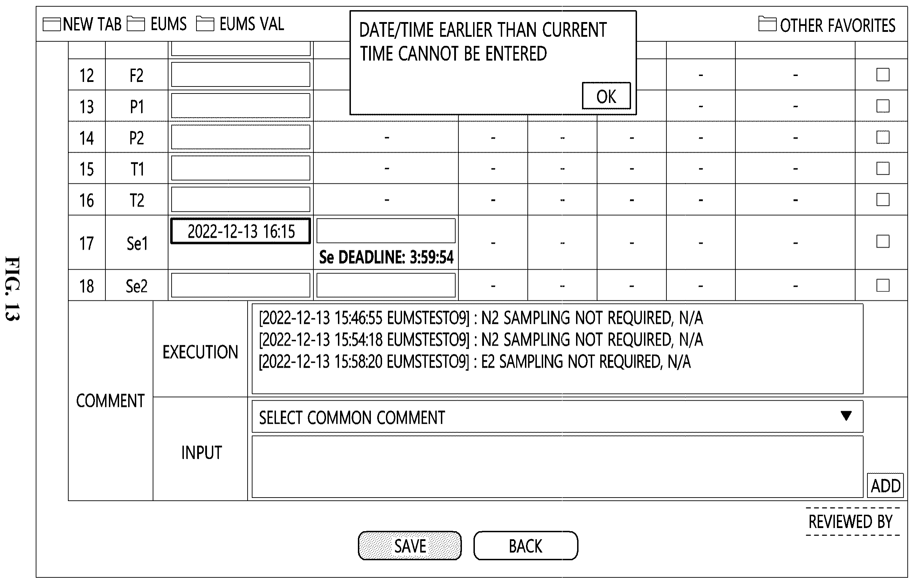

FIG. 13 is an example of a message generated for the entry of a time earlier than the current time.

Referring to FIG. 13, it can be seen that, when a user enters a time earlier than the current time as the sampling execution time, a message saying that the date and time earlier than the current time cannot be entered is generated. By controlling entry of the sampling time, data integrity may be ensured.

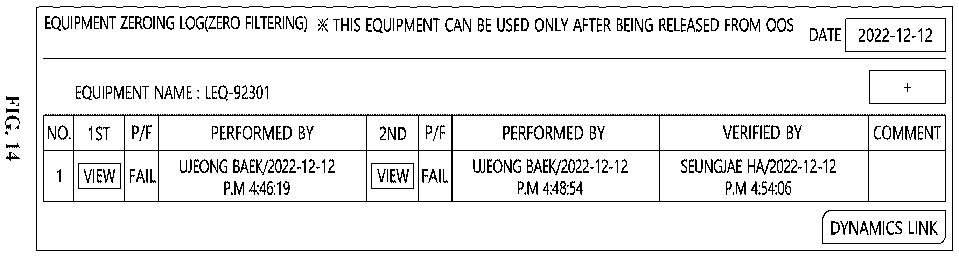

FIG. 14 is an example display of an unavailable equipment list.

Referring to FIG. 14, unavailable equipment may be displayed in the equipment zeroing log tab. By displaying the unavailable equipment in a separate tab, compliance with GMP procedures may be ensured, whereby quality may be ensured.

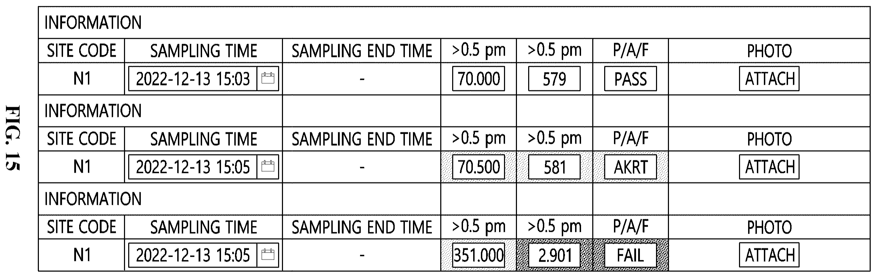

FIG. 15 is an example of an automatic determination screen for measurement results.

Referring to FIG. 15, it can be seen that the sampling measurement results are automatically determined to be pass, alert, or fail based on criteria for the sampling measurement results and that the determination results are displayed using different colors. By displaying the processing results in this way, the accuracy of the results may be ensured.

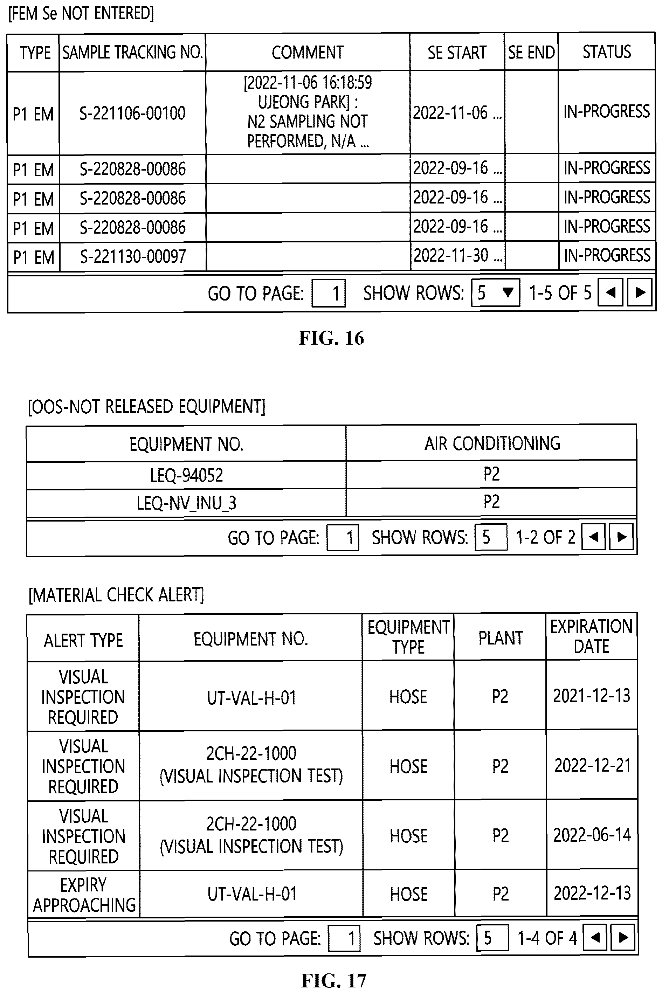

FIG. 16 is an example display of a list with unentered end times.

Referring to FIG. 16, it can be seen that the FEM Se tab shows sampling data with an unentered sampling end time. By separately displaying the data with an unentered end time in this way, the omission of sampling may be prevented.

FIG. 17 is an example display of a list of equipment that needs to be checked.

Referring to FIG. 17, a separate list related to equipment may be provided through an out-of-service (OOS)-not-released equipment tab and a material check alert. By providing a check list related to equipment, the use of unavailable equipment may be prevented, and quality may be ensured.

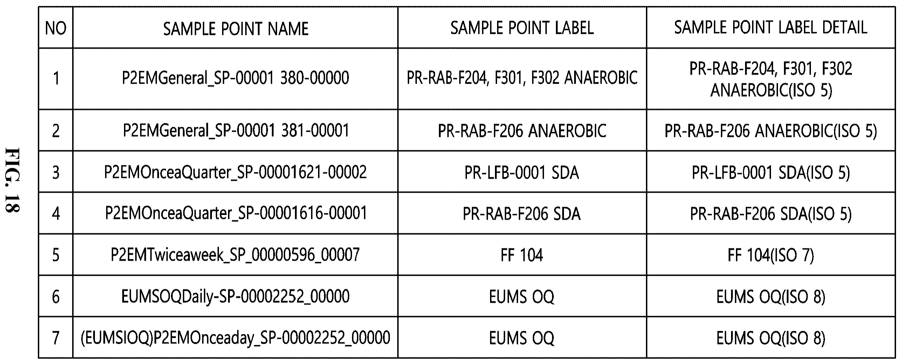

FIGS. 18 to 21 are examples of content included in a missing task message.

The missing task notification message may be generated when reference information of the sampling schedule is not entered, when a monitoring task corresponding to the sampling schedule is not performed, when received sampling information does not match schedule information, or when any information is missing from the received sampling information.

FIG. 18 is an example of a notification message when reference information of a sampling schedule is not entered. When reference information of a sampling schedule is not entered, the missing task notification message may include a sampling point and labeling information (details) corresponding to the sampling point.

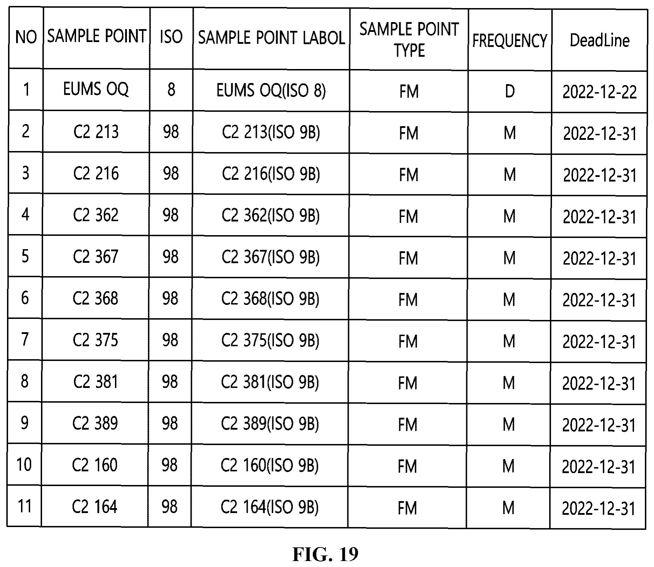

FIG. 19 is an example of a notification message when a monitoring task corresponding to a sampling schedule is not performed. When the monitoring task corresponding to the sampling schedule is not performed, the missing task notification message may include a sampling point, labeling information corresponding to the sampling point, a sampling frequency, and a monitoring task deadline.

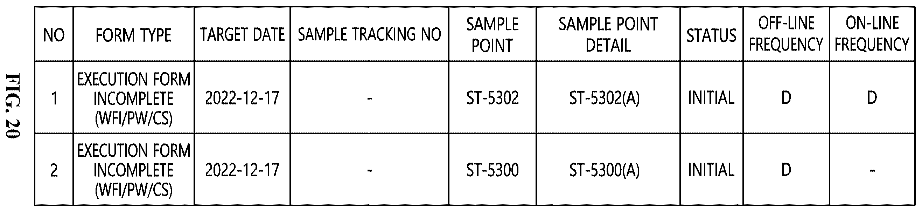

FIG. 20 is an example of a notification message when received sampling information does not match schedule information. When the received sampling information does not match schedule information, the missing task notification message may include information about a target date, a tracking number, a sampling point, an execution form status, and a sampling frequency.

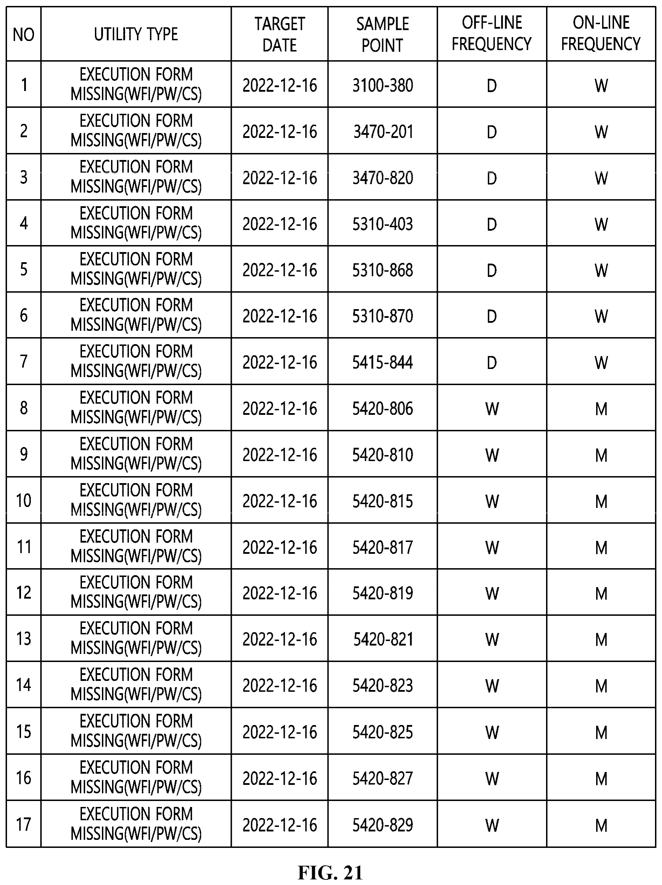

FIG. 21 is an example of a notification message when any information is missing from received sampling information. When any information is missing from the received sampling information, the missing task notification message may include information about a missing information type, a target date, a sampling point, and a sampling frequency.

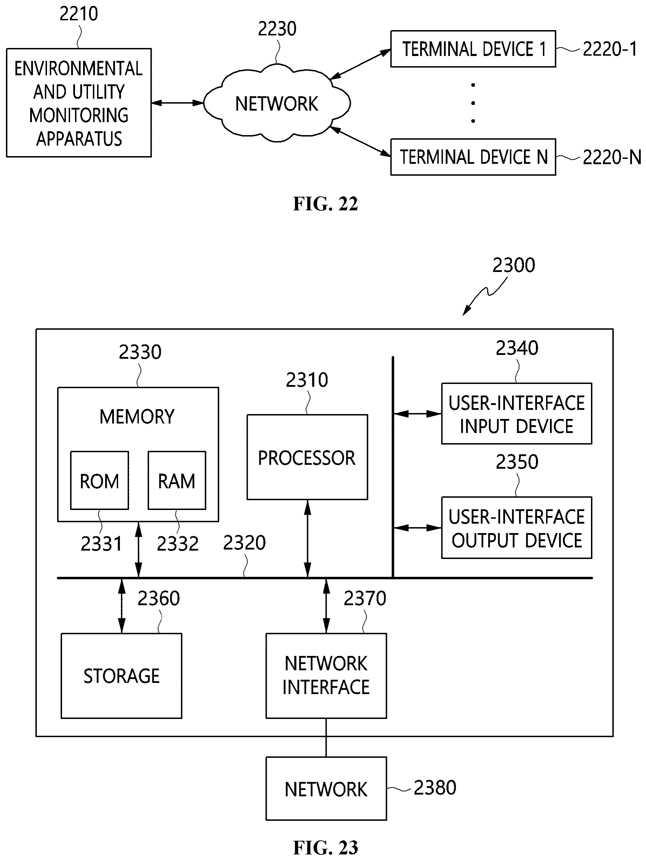

FIG. 22 is a block diagram illustrating a system for environmental and utility monitoring according to an embodiment of the present disclosure.

Referring to FIG. 22, the system for environmental and utility monitoring according to an embodiment of the present disclosure includes an environmental and utility monitoring apparatus 2210, terminal devices 2220-1, ...., 2220-N, and a network 2230.

The environmental and utility monitoring apparatus 2210 may perform the functions for environmental and utility monitoring described above with reference to FIGS. 1 to 21.

The terminal devices 2220-1, ..., 2220-N may receive an interface screen for environmental and utility monitoring from the environmental and utility monitoring apparatus 2210 and may input information about sampling.

Here, each of the terminal devices 2220-1, ..., 2220-N is a device that is capable of executing an application by being connected to the network, and may be any of various types of terminals including all information communication devices, multimedia terminals, wired terminals, fixed-type terminals, Internet Protocol (IP) terminals, and the like, without being limited to computers or mobile communication terminals. Also, each of the terminal devices 2220-1, ..., 2220-N may be a mobile terminal having various mobile communication specifications, such as a mobile phone, a Portable Multimedia Player (PMP), a Mobile Internet Device (MID), a smartphone, a desktop PC, a tablet PC, a laptop, a netbook, a Personal Digital Assistant (PDA), a smart TV, an information communication device, or the like.

The network 2230 provides a channel via which data is delivered between the environmental and utility monitoring apparatus 2210 and the terminal devices 2220-1, ..., 2220-N, and may be conceptually understood as including networks that are currently being used and networks that have yet to be developed. For example, the network 2230 may be any one of a wired/wireless local area network for providing communication between various kinds of information devices within a limited area, a mobile communication network for providing communication between mobile devices or between a mobile device and the outside thereof, a satellite communication network for providing communication between earth stations using a satellite, and a wired/wireless communication network, or a combination of two or more selected therefrom. Meanwhile, the transmission protocol standard for the network 2230 may include all transmission protocol standards to be developed in the future, without being limited to existing transmission protocol standards. Also, in FIG. 22, the network used between the environmental and utility monitoring apparatus 2210 and the terminal devices 2220-1, ..., 2220-N may be different from or the same as the network used between the terminal devices 2220-1, ..., 2220-N.

FIG. 23 is a view illustrating the configuration of a computer system according to an embodiment.

The apparatus for environmental and utility monitoring according to an embodiment may be implemented in a computer system 2300 such as a computer-readable recording medium.

The computer system 2300 may include one or more processors 2310, memory 2330, a user-interface input device 2340, a user-interface output device 2350, and storage 2360, which communicate with each other via a bus 2320. Also, the computer system 2300 may further include a network interface 2370 connected to a network 2380. The processor 2310 may be a central processing unit or a semiconductor device for executing a program or processing instructions stored in the memory 2330 or the storage 2360. The memory 2330 and the storage 2360 may be any of storage media including at least one of a volatile medium, a nonvolatile medium, a detachable medium, a non-detachable medium, a communication medium, or an information delivery medium, or a combination thereof. For example, the memory 2330 may include ROM 2331 or RAM 2332.

The apparatus for environmental and utility monitoring in a pharmaceutical manufacturing facility according to an embodiment of the present disclosure includes a processor 2330 for generating a sampling schedule for environmental and utility monitoring, assigning a sampler and sampling materials for a monitoring task corresponding to the sampling schedule, receiving sampling information on environmental and utility sampling performed based on the sampling schedule, and receiving a request for incubation of a sample corresponding to the sampling and memory 2310 for storing the sampling schedule and the sampling information.

Here, the sampling schedule for the environmental monitoring may include information about a sampling location and a sampling frequency, and the sampling schedule for the utility monitoring may include information about a utility type, a sampling location, a sampling point, an offline sampling frequency, and an online sampling frequency.

Here, the processor may generate a missing task notification message when reference information of the sampling schedule is not entered, when the monitoring task corresponding to the sampling schedule is not performed, when the received sampling information does not match schedule information, or when any information is missing from the received sampling information.

Here, the processor may provide a dashboard including sampling schedule information for environmental and utility monitoring, missing sampling schedule information, information on tasks with unentered sampling times, an unavailable equipment list, and a sampling material check alert.

Here, when receiving the environmental and utility sampling information, the processor may provide a timer function from a sampling execution start time and receive a sampling execution end time only after a preset time period.

Here, the sampling information may include a sampling execution start time, a sampling execution end time, a sampler, sampling status, and sampling material information.

Here, when requesting incubation of the sample, the processor may check whether the incubation of the sample is performed within a preset time period from the sampling time corresponding to the sample and whether the incubation is requested on equipment corresponding to the sample.

Here, the processor may receive information on second environmental sampling performed out of necessity during a manufacturing process different from that of first environmental sampling performed based on the sampling schedule.

Here, the utility monitoring may include monitoring for water for injection, clean steam, purified water, clean air, and clean gas of the pharmaceutical manufacturing facility, and the environmental monitoring may include monitoring for air, a surface, and operators of the pharmaceutical manufacturing facility.

Here, the processor may set online/offline status for the utility monitoring, and the sampling schedule for the utility monitoring may have a different scheduling frequency depending on the online/offline status.

Specific implementations described in the present disclosure are embodiments and are not intended to limit the scope of the present disclosure. For conciseness of the specification, descriptions of conventional electronic components, control systems, software, and other functional aspects thereof may be omitted. Also, lines connecting components or connecting members illustrated in the drawings show functional connections and/or physical or circuit connections, and may be represented as various functional connections, physical connections, or circuit connections that are capable of replacing or being added to an actual device. Also, unless specific terms, such as "essential", "important", or the like, are used, the corresponding components may not be absolutely necessary for application of the present disclosure.

Accordingly, the spirit of the present disclosure should not be construed as being limited to the above-described embodiments, and the entire scope of the appended claims and their equivalents should be understood as defining the scope and spirit of the present disclosure.

## Claims

1. A method for environmental and utility monitoring in a Good Manufacturing Practice (GMP) pharmaceutical manufacturing facility, performed by an apparatus for environmental and utility monitoring, comprising:
generating a sampling schedule for environmental and utility monitoring;
assigning a sampler and sampling materials for a monitoring task corresponding to the sampling schedule;
receiving sampling information on environmental and utility sampling performed based on the sampling schedule; and
requesting incubation of a sample corresponding to the sampling information.

2. The method of claim 1, wherein
the sampling schedule for the environmental monitoring includes information about a sampling location and a sampling frequency, and
the sampling schedule for the utility monitoring includes information about a utility type, a sampling location, a sampling point, an offline sampling frequency, and an online sampling frequency.

3. The method of claim 1, further comprising:
generating a missing task notification message,
wherein the missing task notification message is generated when reference information of the sampling schedule is not entered, when the monitoring task corresponding to the sampling schedule is not performed, when the received sampling information does not match schedule information, or when any information is missing from the received sampling information.

4. The method of claim 1, further comprising:
providing a dashboard that includes sampling schedule information for environmental and utility monitoring, missing sampling schedule information, information on tasks with unentered sampling times, an unavailable equipment list, and a sampling material check alert.

5. The method of claim 1, wherein receiving the sampling information comprises providing a timer function from a sampling execution start time and receiving a sampling execution end time only after a preset time period.

6. The method of claim 1, wherein the sampling information includes a sampling execution start time, a sampling execution end time, a sampler, sampling status, and sampling material information.

7. The method of claim 1, wherein requesting the incubation of the sample comprises checking whether the incubation of the sample is performed within a preset time period from a sampling time corresponding to the sample and whether the incubation is requested on equipment corresponding to the sample.

8. The method of claim 1, wherein receiving the sampling information comprises receiving information on second environmental sampling performed out of necessity during a manufacturing process different from that of first environmental sampling performed based on the sampling schedule.

9. The method of claim 1, wherein
the utility monitoring includes monitoring for water for injection, clean steam, purified water, clean air, and clean gas of the pharmaceutical manufacturing facility, and
the environmental monitoring includes monitoring for air, a surface, and operators of the pharmaceutical manufacturing facility.

10. The method of claim 2, wherein
generating the sampling schedule comprises setting online/offline status for the utility monitoring, and
the sampling schedule for the utility monitoring has a different scheduling frequency depending on the online/offline status.

11. A computer program stored in a computer-readable medium to perform the method for environmental and utility monitoring in a pharmaceutical manufacturing facility described in any one of claims 1 to 10.

12. An apparatus for environmental and utility monitoring in a pharmaceutical manufacturing facility, comprising:
a processor for generating a sampling schedule for environmental and utility monitoring, assigning a sampler and sampling materials for a monitoring task corresponding to the sampling schedule, receiving sampling information on environmental and utility sampling performed based on the sampling schedule, and requesting incubation of a sample corresponding to the sampling information; and
memory for storing the sampling schedule and the sampling information.

13. The apparatus of claim 12, wherein
the sampling schedule for the environmental monitoring includes information about a sampling location and a sampling frequency, and
the sampling schedule for the utility monitoring includes information about a utility type, a sampling location, a sampling point, an offline sampling frequency, and an online sampling frequency.

14. The apparatus of claim 12, wherein the processor generates a missing task notification message when reference information of the sampling schedule is not entered, when the monitoring task corresponding to the sampling schedule is not performed, when the received sampling information does not match schedule information, or when any information is missing from the received sampling information.

15. The apparatus of claim 12, wherein the processor provides a dashboard including sampling schedule information for environmental and utility monitoring, missing sampling schedule information, information on tasks with unentered sampling times, an unavailable equipment list, and a sampling material check alert.

16. The apparatus of claim 12, wherein, when receiving the sampling information, the processor provides a timer function from a sampling execution start time and receives a sampling execution end time only after a preset time period.

17. The apparatus of claim 12, wherein the sampling information includes a sampling execution start time, a sampling execution end time, a sampler, sampling status, and sampling material information.

18. The apparatus of claim 12, wherein, when requesting the incubation of the sample, the processor checks whether the incubation of the sample is performed within a preset time period from a sampling time corresponding to the sample and whether the incubation is requested on equipment corresponding to the sample.

19. The apparatus of claim 12, wherein the processor receives information on second environmental sampling performed out of necessity during a manufacturing process different from that of first environmental sampling performed based on the sampling schedule.

20. The apparatus of claim 12, wherein
the utility monitoring includes monitoring for water for injection, clean steam, purified water, clean air, and clean gas of the pharmaceutical manufacturing facility, and
the environmental monitoring includes monitoring for air, a surface, and operators of the pharmaceutical manufacturing facility.
